(19) Europäisches Patentamt
European Patent Office
Office européen des brevets

(11) **EP 4 593 106 A1**

(12) **EUROPEAN PATENT APPLICATION**
published in accordance with Art. 153(4) EPC

(43) Date of publication:
**30.07.2025 Bulletin 2025/31**

(21) Application number: **23870522.2**

(22) Date of filing: **20.09.2023**

(51) International Patent Classification (IPC):
$H01M\ 4/133^{(2010.01)}$  $H01M\ 10/0567^{(2010.01)}$
$H01M\ 10/0525^{(2010.01)}$

(52) Cooperative Patent Classification (CPC):
Y02E 60/10

(86) International application number:
**PCT/CN2023/120029**

(87) International publication number:
**WO 2024/067290 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022  CN 202211169554**

(71) Applicant: **BYD Company Limited
Shenzhen, Guangdong 518118 (CN)**

(72) Inventors:
• **ZHANG, Wei
  Shenzhen, Guangdong 518118 (CN)**
• **LI, Honghong
  Shenzhen, Guangdong 518118 (CN)**
• **JIN, Jing
  Shenzhen, Guangdong 518118 (CN)**
• **LEI, Yudong
  Shenzhen, Guangdong 518118 (CN)**

(74) Representative: **Taor, Simon Edward William et al
Venner Shipley LLP
200 Aldersgate
London EC1A 4HD (GB)**

(54) **LITHIUM BATTERY AND ELECTRIC DEVICE**

(57)  A lithium battery and an electric device. The lithium battery comprises a positive electrode plate, a negative electrode plate, a separator and an electrolyte solution, wherein the negative electrode plate comprises a current collector and a negative electrode active material layer provided on a surface of the current collector, and the electrolyte solution comprises a lithium salt, an organic solvent, and an additive, the additive comprising a fluorocarbonate and a nitrile substance. The negative electrode active material layer has a thickness of $D_1$ $\mu$m. The corresponding particle size is $D_v50$ $\mu$m when the negative electrode active material contained in the negative electrode active material layer has a volume cumulative distribution percentage reaching 50%, and the corresponding particle size is $D_v90$ $\mu$m when the negative electrode active material contained in the negative electrode active material layer has a volume cumulative distribution percentage reaching 90%. On the basis of the total mass of the electrolyte solution, the mass content of the fluorocarbonate is $W_0$%, and the mass content of the nitrile substance is $W_1$%. The lithium battery has a performance factor $k = (2D_1/D_v90+D_v50)/(W_0+W_1)$, and $k$ is in the range of 0.5-3.

FIG. 1

EP 4 593 106 A1

Description

## CROSS-REFERENCE TO RELATED APLICATIONS

The present disclosure claims priority to Chinese Patent Application No. 202211169554.5 filed on September 26, 2022 and entitled "LITHIUM BATTERY AND ELECTRIC DEVICE", which is incorporated herein by reference in its entirety.

## FIELD

The present disclosure relates to the technical field of batteries, and specifically to a lithium battery and an electric device.

## BACKGROUND

Lithium-ion batteries (also known as "lithium batteries"), due to high voltage, long life, no memory effect, and other characteristics, are widely used in mobile electronic devices, electric vehicles, drones, and other fields. With the continuous development of products powered by lithium-ion batteries, higher requirements are raised for the energy density, cycle performance, and safety performance of lithium-ion batteries.

During the charging and discharging process of lithium-ion batteries, the negative electrode active material undergoes lithium intercalation and deintercalation constantly, causing a solid electrolyte interface (SEI) film on the surface of the negative electrode active material to continuously crack and generate a new interface. This leads to the direct contact of the negative electrode active material with the electrolyte solution and the occurrence of side reactions, causing the loss of active lithium and thus reducing the energy density and cycle life of the batteries. In addition, the stability of the SEI film formed on the surface of the negative electrode also directly affects the stability of the lithium-ion batteries tested in a furnace-temperature test, which is directly related to the safety performance of the lithium-ion batteries.

Currently, there are no effective technical solutions that can make the battery practically have good long-cycle ability and safety performance.

## SUMMARY

In view of this, the present disclosure provides a lithium-ion battery and an electric device. By defining a relative relation between the thickness of the negative electrode active material layer, the particle size of the negative electrode active material, and the electrolyte solution, the lithium-ion battery is ensured to have a long cycle life and a good furnace-temperature performance at 130°C.

In a first aspect, the present disclosure provides a lithium battery. The lithium battery includes a positive electrode plate, a negative electrode plate, a separator, and an electrolyte solution. The negative electrode plate includes a current collector and a negative electrode active material layer arranged on at least one side surface of the current collector. The electrolyte solution includes a lithium salt, an organic solvent, and an additive, where the additive includes a fluorinated carbonate and a nitrile substance. The negative electrode active material layer has a thickness of $D_1$ $\mu m$. The corresponding particle size is $D_v50$ $\mu m$ when the negative electrode active material contained in the negative electrode active material layer has a volume cumulative distribution percentage reaching 50%, and the corresponding particle size is $D_v90$ $\mu m$ when the negative electrode active material contained in the negative electrode active material layer has a volume cumulative distribution percentage reaching 90%. Based on the total weight of the electrolyte solution, the weight content of the fluorinated carbonate is $W_0$%, and the weight content of the nitrile substance is $W_1$%. The lithium battery has a performance factor k meeting a relation formula below: $k=(2D_1/D_v90+D_v50)/(W_0+W_1)$, and $0.5 \leq k \leq 3.0$.

By adding the fluorinated carbonate and the nitrile substance as additives to the electrolyte solution, a stable and dense SEI film is formed on the negative electrode and an oxidation-resistant protective film is formed on the positive electrode to prevent the decomposition of the electrolyte solution and thus the gas generation on the positive electrode. By virtue of the co-working of these 2 additives and a quantitative relation established between their contents and the thickness of the negative electrode and the particle size of the negative electrode active material, the performance factor k of the battery is defined. By controlling k in the range of 0.5-3, the purpose of improving the cycle performance and furnace-temperature performance of the lithium battery can be achieved.

In some embodiments, k is in the range of: $1.0 \leq k \leq 2.0$.

In some embodiments, $W_0$ is in the range of: $2 \leq W_0 \leq 16$.

In some embodiments, $W_0$ is in the range of: $5 \leq W_0 \leq 10$.

In some embodiments, $W_1$ is in the range of: $2 \leq W_1 \leq 10$.

In some embodiments, the ratio of $W_0$ to $W_1$ meets: $0.5 \leq W_0/W_1 \leq 4$.

In some embodiments, the ratio of $W_0$ to $W_1$ meets: $1.5 \leq W_0/W_1 \leq 3.0$.

In some embodiments, $D_1$ is in the range of: $30<D_1<90$.

In some embodiments, $D_1$ is in the range of: $40\leq D_1\leq 80$.

In some embodiments, the particle size of the negative electrode active material meets: $8\leq D_v50<D_v90\leq 40$.

In some embodiments, the ratio of $D_1$ to $D_v90$ is greater than or equal to 1.

In some embodiments, the fluorinated carbonate includes at least one of fluoroethylene carbonate, 4,5-difluoroethylene carbonate, 4,4,5,5-tetrafluoroethylene carbonate, and 4-trifluoromethylethylene carbonate. The nitrile substance includes at least one of succinonitrile, adipodinitrile, glutaronitrile, butenedinitrile, 1,4-dicyano-2-butene, 3,3'-oxydipropionitrile, ethylene glycol diacetonitrile ether, 1,2,3-tri(2-cyanooxy)propane, 1,3,5-pentanetricarbonitrile, 1,2,3-propanetricarbonitrile, and 1,3,6-hexanetricarbonitrile.

In some embodiments, the organic solvent includes a carboxylate substance. The carboxylate substance includes at least one of ethyl acetate, propyl acetate, ethyl propionate, propyl propionate, butyl propionate, pentyl propionate, ethyl haloacetate, ethyl halopropionate, propyl halopropionate, butyl halopropionate, and amyl halopropionate.

In some embodiments, the organic solvent further includes a cyclic carbonate.

In some embodiments, the organic solvent further includes a linear carbonate substance.

In some embodiments, based on the total weight of the electrolyte solution, the total weight content of the carboxylate substance is $W_2$ %, and $W_2/W_0\geq 2$.

In some embodiments, the ratio of $W_2$ to $W_0$ meets: $2.5\leq W_2/W_0\leq 8$.

In some embodiments, the additive further includes at least one of 1,3-propanesultone, vinylene carbonate, and vinylethylene carbonate.

In a second aspect, the present disclosure provides an electric device. The electric device includes a lithium battery according to the first aspect of the present disclosure.

Due to the use of the lithium battery, the battery of the electric device has a long battery life, a good cycle performance, and a high safety.

## BRIEF DESCRIPTION OF THE DRAWINGS

FIG. 1 is a schematic structural view of a lithium battery according to an embodiment of the present disclosure.
FIG. 2 is a schematic structural view of an electric device according to an embodiment of the present disclosure.

List of reference numerals:

1-electric device, 10-lithium battery, 110-positive electrode plate, 111-positive electrode current collector, 112-positive electrode active material layer, 120-negative electrode plate, 121-negative electrode current collector, 122-negative electrode active material layer, 130-separator, 140-electrolyte solution.

## DETAILED DESCRIPTION

The technical solution according to the embodiments of the present disclosure is described in detail hereinafter.

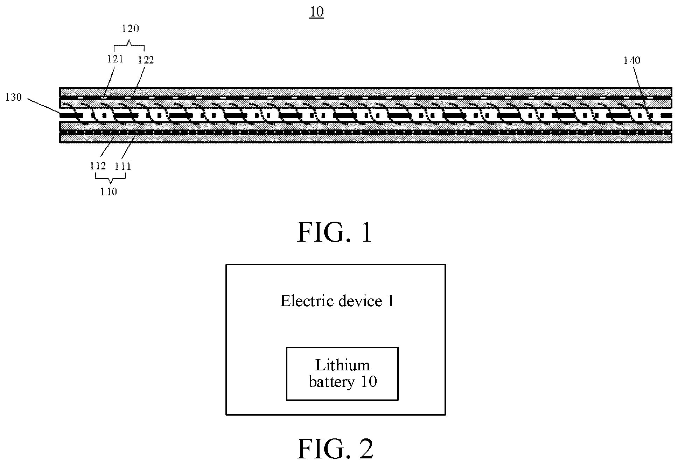

An embodiment of the present disclosure provides a lithium battery. As shown in FIG. 1, a lithium battery 10 includes a positive electrode plate 110, a negative electrode plate 120, a separator 130, and an electrolyte solution 140. The negative electrode plate 120 includes a negative electrode current collector 121 and a negative electrode active material layer 122 arranged on at least one side surface of the negative electrode current collector 121. The electrolyte solution includes a lithium salt, an organic solvent, and an additive, where the additive includes a fluorinated carbonate and a nitrile substance. The negative electrode active material layer 122 has a thickness of $D_1$ $\mu$m. The corresponding particle size is $D_v50$ $\mu$m when the negative electrode active material contained in the negative electrode active material layer 122 has a volume cumulative distribution percentage reaching 50%, and the corresponding particle size is $D_v90$ $\mu$m when the negative electrode active material contained in the negative electrode active material layer 122 has a volume cumulative distribution percentage reaching 90%. Based on the total weight of the electrolyte solution 140, the weight content of the fluorinated carbonate is $W_0$%, and the weight content of the nitrile substance is $W_1$%. The lithium battery 10 has a performance factor k meeting a relation formula below:

$$k=\frac{\left(\frac{2D_1}{D_v90}+D_v50\right)}{(W_0+W_1)},$$

and k is in the range of 0.5-3.0.

In some embodiments of the present disclosure, as shown in FIG. 1, the positive electrode plate 110 includes a positive electrode current collector 111 and a positive electrode active material layer 112 arranged on at least one side surface of the positive electrode current collector 111.

In the present disclosure, the fluorinated carbonate and the nitrile substance are added as additives to the electrolyte solution of the lithium battery. By virtue of the high affinity of the fluorinated carbonate to the negative electrode active material, a stable and dense SEI film can be formed on the surface of the negative electrode, to avoid the continuous cracking and reconstruction of the SEI film, reduce the decomposition of the electrolyte solution and the consumption of active lithium, and improve the cycle performance of the battery. However, the fluorinated carbonate is prone to oxidation to generate gas at the positive electrode interface of the lithium battery. After the nitrile substance is introduced, the nitrile substance can be complexed to the positive electrode interface to form a protective film that isolates the electrolyte solution from the positive electrode active material, reduces the dissolution of metal ions from the positive electrode, and reduces the oxidative decomposition of the electrolyte solution by the positive electrode active material, thus improving the furnace-temperature performance of the battery. Therefore, the fluorinated carbonate and the nitrile substance are used as additives in combination in the present disclosure. With functions complementing each other, a relation is established between the contents of the two substances and the particle size of the negative electrode active material and the thickness of the negative electrode active material layer, and the performance factor k of the battery is defined. k is controlled in the range of 0.5-3, to ensure that the lithium battery can well have a long cycle life and a good furnace-temperature performance.

After analysis, the possible reason is speculated by the applicant to be that $D_1/D_v90$ can reflect the degree of fragmentation of the negative electrode active particles during the rolling process of the negative electrode plate to a certain extent. $D_v50$ reflects the overall size of the negative electrode active material particles, specifically, for example, the number of active sites on the surface of the negative electrode active material particles, and the degree of fragmentation of the particles during rolling. However, the cracking of the negative electrode active particles will produce more active interfaces, which causes the increased consumption of the electrolyte solution in the formation and cycle process, the loss of capacity of the negative electrode active material, and the easy lithium plating on the surface of the negative electrode during the charging process. The fluorinated carbonate can form a stable SEI film on the negative electrode that is beneficial to the cycle, but it is prone to oxidation to generate a gas at the positive electrode interface. The nitrile substance can form a protective film at the positive electrode interface that isolates the electrolyte solution from the positive electrode active material. However, the compatibility of the nitrile substance with the negative electrode active materials is not very good, and has a certain impact on the cycle performance. The influence of the above parameters on the battery performance is diverse, mutual, and difficult to quantify. However, through a series of studies, the present applicant finds that $(2D_1/D_v90+D_v50)/(W_0+W_1)$ can reflect the comprehensive influence of the negative electrode plate and the electrolyte solution on the cycle performance, furnace-temperature performance, and lithium plating of the battery. By controlling $(2D_1/D_v90+D_v50)/(W_0+W_1)$ in the range of 0.5-3, the cycle performance, and furnace-temperature performance, lithium plating and other safety performance of the battery can be well balanced, so as to improve the comprehensive performance of the battery.

In the present disclosure, $D_v90$ and $D_v50$ of the negative electrode active material can be determined as follows: The negative electrode plate disassembled from the battery is soaked in dimethyl carbonate (DMC) for 1 h, then taken out, washed twice with DMC to remove the residual electrolyte solution on the surface of the electrode plate, and naturally air-dried. The air-dried electrode plate is immersed in deionized water until the negative electrode material is separated from the current collector. Then the negative electrode material is dried in an oven at 100°C to remove water. Next, the dried negative electrode material is heat-treated in a tube furnace at 800°C under a helium atmosphere for 6 h, to remove the binder and thickener in the negative electrode material, and thus obtain the negative electrode active material. Finally, the particle size distribution of the obtained negative electrode active material is tested by laser diffraction, and $D_v90$ and $D_v50$ are acquired from the obtained particle size distribution curve. The test method can be found in GB/T 19077-2016/ISO 13320:2009 particle size analysis - Laser diffraction methods. The instrument for detecting $D_v90$ and $D_v50$ is generally a laser particle sizer analyzer (such as Malvin 3000 laser particle analyzer). The corresponding particle size $D_v50$ when the negative electrode active material has a volume cumulative distribution percentage reaching 50% can also be referred to as "median particle size" of the material. Additionally, $W_0$ and $W_1$ can be obtained by analyzing the composition of the electrolyte solution. $D_1$ can be obtained by directly or indirectly determining the thickness of the negative electrode active material layer, and refers to the thickness of the single-sided negative electrode active material layer.

In some embodiments of the present disclosure, the parameter k is in the range of 1.0-2.0. In this case, the lithium battery can better balance the cycle performance and the furnace-temperature performance, so as to have better comprehensive performance.

In an embodiment of the present disclosure, the fluorinated carbonate includes a fluorinated cyclic carbonate. The fluorinated cyclic carbonate may specifically include one or more of fluoroethylene carbonate, 4,5-difluoroethylene carbonate, 4,4,5,5-tetrafluoroethylene carbonate, and 4-trifluoromethylethylene carbonate.

In some embodiments of the present disclosure, $W_0$ is in the range of: $2 \leq W_0 \leq 16$. In other words, based on the total weight of the electrolyte solution, the weight content of the fluorinated carbonate is 2%-16%. Specifically, the weight content may be 2.1%, 2.5%, 3%, 3.5%, 4%, 4.5%, 5.5%, 6%, 8%, 9%, 11%, 12%, 14%, 15%, or 15.5%. That is, $W_0$ may be specifically 2.1, 2.5, 3, 3.5, 4, 4.5, 5.5, 6, 8, 9, 11, 12, 14, 15, or 15.5. In some embodiments, $6 \leq W_0 \leq 12$. In this case, the parameter k can be set in a preferred range of 1-2, to allow the battery to have a low battery core expansion rate and a good furnace-temperature test result, while the battery is ensured to have a high cycle capacity retention rate. In some other embodiments, $8 \leq W_0 \leq 10$, such that the battery has a lower battery core expansion rate and better furnace-temperature test result.

By controlling the content $W_0$ of the fluorinated carbonate in the electrolyte solution in an appropriate range, a stable SEI film is formed on the surface of the negative electrode, the battery is ensured to have a long cycle ability, the failure in furnace-temperature performance of the battery caused by an unstable SEI film is avoided, and the gas generation due to oxidative decomposition of the fluorinated carbonate at the positive electrode is alleviated, to avoid the obvious expansion in thickness of the battery core, and ensure the good furnace-temperature performance of the battery. In some embodiments, $W_0$ is in the range of $5 \leq W_0 \leq 10$. When $W_0$ is in this range, the lithium battery can have a long cycle performance, and reduce the expansion of the battery as much as possible.

In an embodiment of the present disclosure, the nitrile substance includes one or more of succinonitrile, adipodinitrile, glutaronitrile, butenedinitrile, 1,4-dicyano-2-butene, 3,3'-oxydipropionitrile, ethylene glycol diacetonitrile ether, 1,2,3-tri(2-cyanooxy)propane, 1,3,5-pentanetricarbonitrile, 1,2,3-propanetricarbonitrile, 1,3,6-hexanetricarbonitrile, and 1,2,3-tri(2-cyanooxy)propane.

In some embodiments of the present disclosure, $W_1$ is in the range of: $2 \leq W_1 \leq 10$. That is, based on the total weight of the electrolyte solution, the weight content of the nitrile substance is 2%-10%. Specifically, the weight content may be 2%, 2.5%, 3%, 3.3%, 4%, 4.6%, 5%, 5.5%, 6%, 7%, 8%, 9%, or 10%.

By controlling the content $W_1$ of the nitrile substance in the electrolyte solution in an appropriate range, the positive electrode interface is fully protected, and the electrolyte solution is not prone to oxidation and decomposition to produce gas, so that the battery has good furnace-temperature performance and cycle performance. The electrolyte solution is ensured to have a suitable viscosity, the lithium ion transmission rate is appropriate, the battery impedance will not increase obviously, the lithium plating is unlikely to occur on the negative electrode during the long cycle process, the capacity retention rate of the battery is high, and the thickness of the battery core does not increase obviously.

In some embodiments of the present disclosure, the ratio of $W_0$ to $W_1$ meets: $0.5 \leq W_0/W_1 \leq 4$. That is, the weight ratio of the fluorinated carbonate to the nitrile substance is in the range of 0.5-4. This can not only ensure that a stable and uniform SEI film is formed on the surface of the negative electrode during the cycle process, but also ensure that the positive electrode interface is effectively protected, whereby the battery can have good cycle performance, furnace-temperature performance, and non-obvious battery core expansion. Specifically, $W_0/W_1$ may be 0.8, 1.0, 1.2, 1.5, 1.6, 1.7, 1.8, 2.0, 2.2, 2.3, 2.5, 2.6, 2.8, 3.0, or 3.5. In some embodiments, $W_0/W_1$ is in the range of 1.5-3.0. In this case, the lithium battery can have a long cycle performance and a good furnace-temperature performance. Further, $W_0/W_1$ is in the range of 1.5-2.5.

The electrolyte solution of the lithium battery according to the present disclosure includes a lithium salt, an organic solvent, and an additive. The additive includes the fluorinated carbonate and the nitrile substance. In some embodiments of the present disclosure, the organic solvent includes a carboxylate substance. The carboxylate substance is generally a linear ester, which can reduce the viscosity of the electrolyte solution to ensure the electrolyte solution to have a good fluidity, and ensure the infiltration of the electrolyte solution to the electrode plate and the separator and the low-temperature discharging performance of the battery. The carboxylate substance includes one or more of ethyl acetate, propyl acetate, ethyl propionate, propyl propionate (PP), butyl propionate, pentyl propionate, ethyl haloacetate, ethyl halopropionate, propyl halopropionate, butyl halopropionate, and amyl halopropionate.

In some embodiments of the present disclosure, the organic solvent further includes a cyclic carbonate. That is, the organic solvent at this time includes a carboxylate substance and a cyclic carbonate. The cyclic carbonate promotes the dissociation of the lithium salt in the electrolyte solution, and ensures the electrolyte solution to have a good ionic conductivity. The presence of the carboxylate substance reduces the viscosity of the electrolyte solution, improves the infiltrability by the electrolyte solution, promotes the formation of a uniform and stable SEI film, improves the ionic conductivity, and improves the rate performance and cycle performance of the battery. The combination of the two facilitates the electrolyte solution to maintain a low viscosity and contributes to the solubility of the lithium salt in the electrolyte solution. The cyclic carbonate may include at least one of ethylene carbonate (EC), propylene carbonate (PC), butylene carbonate, haloethylene carbonate, halopropylene carbonate, and the like.

In some embodiments, the organic solvent further includes a linear carbonate substance. That is, the organic solvent at this time includes a carboxylate substance, a cyclic carbonate, and a linear carbonate substance. The presence of the linear carbonate substance can further reduce the viscosity of the electrolyte solution, to ensure the infiltrability of the electrolyte solution to the electrode plate and the separator. The linear carbonate substance may include at least one of dimethyl carbonate (DMC), methyl ethyl carbonate (EMC), diethyl carbonate (DEC), dipropyl carbonate (DPC), methyl propyl carbonate (MPC), ethyl propyl carbonate, halogenated dimethyl carbonate, halogenated ethyl methyl carbonate, halogenated diethyl carbonate, and the like.

In an embodiment of the present disclosure, based on the total weight of the electrolyte solution, the total weight content of the carboxylate substance is $W_2$ %, and $W_2/W_0 \geq 2$. This reduce the expansion rate of the battery during the cycle process. In some embodiments, $2.5 \leq W_2/W_0 \leq 8$. In this case, the lithium battery has good infiltrability by the electrolyte solution and good dynamic performance, which promotes the formation of a uniform SEI film on the surface of the negative electrode active material by the fluorinated carbonate, and facilitates the battery to have a low battery core expansion rate and a good capacity retention rate. Specifically, $W_2/W_0$ may be 2.6, 2.7, 2.8, 2.9, 3.0, 3.1, 3.2, 3.5, 4.0, 5.0, 6.0, 6.5, 7.0, 7.5, or 7.9. Further, in some embodiments, $W_2/W_0$ is in the range of 3.0-7.0.

In some embodiments of the present disclosure, the additives in the electrolyte solution may further include, in addition to the fluorinated carbonate and the nitrile substance, one or more of 1,3-propanesultone (PS), vinylene carbonate (VC), and vinyl ethylene carbonate (VEC). These additives promote the formation of a stable SEI film during the cycle process of the battery. Particularly, 1,3-propanesultone is particularly helpful to improve the high temperature resistance, such as the furnace temperature performance, of the lithium battery.

The lithium salt includes one or more of lithium hexafluorophosphate ($LiPF_6$), lithium tetrafluoroborate ($LiBF_4$), lithium hexafluoroarsenate ($LiAsF_6$), lithium hexafluorosilicate ($Li_2SiF_6$), lithium hexafluoroantimonate ($LiSbF_6$), lithium perchlorate ($LiClO_4$), lithium bis(oxalato)borate (LiBOB), lithium difluoro(oxalato) borate (LiDFOB), sodium bis(fluorosulfonyl)imide (LiFSI, molecular formula $LiN(SO_2F)_2$), lithium bis(trifluoromethylsulfonyl)imide (LiTFSI, molecular formula $LiN(SO_2CF_3)_2$), lithium bis(perfluoroethylsulfonyl)imide ($LiN(C_2F_5SO_2)_2$), lithium trifluoromethylsulfonate ($LiCF_3SO_3$), and lithium perfluorobutylsulfonate ($LiC_4F_9SO_3$).

Optionally, the content in percent by weight of the lithium salt in the electrolyte solution may be 12%-18%. In this case, it is ensured that the transmission resistance of lithium ions in the electrolyte solution is not too large to make the rate performance of the battery worse, and that the viscosity of the electrolyte solution will not be too large to cause the failure to effectively infiltrate the positive/negative electrodes, affecting the performance of the battery.

In some embodiments of the present disclosure, $D_1$ is in the range of: $30 < D_1 < 90$. That is, the thickness of the negative electrode active material layer is in the range of 30 $\mu$m-90 $\mu$m. It is to be understood that whether the negative electrode plate is arranged with the negative electrode active material layer on one or two side surfaces, $D_1$ refers to the thickness of the single-sided negative electrode active material layer. In this case, the thickness of the negative electrode active material layer is appropriate, to facilitate the battery to have good normal-temperature cycle performance and furnace-temperature performance. Specifically, the negative electrode active material layer of an appropriate thickness facilitates the infiltration by the electrolyte solution, promotes the formation of a uniform and stable SEI film on the surface of the negative electrode active material, reduces the transmission resistance of lithium ions in the negative electrode, and permits the battery to pass the furnace-temperature test easily. By using the negative electrode active material layer of an appropriate thickness, the increase in thickness of the negative electrode SEI film and thus the consumption of active lithium caused by the continuous reduction of the electrolyte solution by an incomplete SEI film during the cycle process of the battery can also be avoided, to facilitate the battery to maintain a high capacity retention rate. Additionally, the negative electrode active material layer of an appropriate thickness can also ensure a suitable load of the negative electrode active material in the battery and a high energy density of the battery. In some embodiments, $D_1$ is in the range of 40-80.

In some embodiments of the present disclosure, the particle size of the negative electrode active material meets: $8 \leq D_v50 < D_v90 \leq 40$. The particle size $D_v50$ of the negative electrode active material can reflect the overall particle size distribution. A suitable particle size $D_v50$ can ensure that the negative electrode active material has a suitable specific surface area, so that the consumption of the electrolyte solution, particularly, the fluorinated carbonate, will not be too fast during the cycle process of the battery, and the side reaction at the negative electrode will not be too violent, thus enabling the battery to have a high capacity retention rate during the long cycle process. Additionally, a suitable particle size $D_v50$ of the negative electrode active material facilitates the negative electrode active material layer to have an appropriate porosity, which reduces the diffusion and migration resistance of ions in a liquid, and is ultimately beneficial to the rate performance and cycle performance of the battery. In some embodiments, $8 \leq D_v50 < 36$, for example, specifically, 8, 10, 12, 14, 16, 18, 20, 21, 23, 25, 27, 30, 32, 34, and 35. In some embodiments, $D_v50$ is in the range of 8-30, and preferably in the range of 8-20.

The particle size $D_v90$ of the negative electrode active material can reflect the large particles contained therein. By controlling $D_v90$ to be less than 40 $\mu$m, the negative electrode plate has a low processing difficulty, the negative electrode active material layer has a good flatness, the negative electrode active material is unlikely to be crushed to produce more active fracture surfaces, and the consumption of the electrolyte solution and the fluorinated carbonate in the formation and cycle process is low, thus ensuring the good cycle performance of the battery. In some embodiments, $D_v90$ is in the range of 10-40, further in the range of 12-40, and preferably in the range of 15-35. Generally, $D_1$ is greater than or equal to 1 time of $D_v90$. This ensures that the negative electrode active material will not be crushed in the rolling process of the negative electrode plate, thus improving the stability of the negative electrode plate, improving the cycle performance of the battery, and alleviating the expansion of the battery core.

In an embodiment of the present disclosure, the negative electrode active material may include, but is not limited to, one or more of a carbon material, a silicon based material, a tin-based material, and lithium titanate. The carbon material includes one or more of soft carbon, hard carbon, carbon fibers, graphitized carbon microspheres, artificial graphite, and natural graphite. The silicon-based material includes one or more of elemental silicon, a silicon alloy, a silicon oxide, a silicon-carbon composite material, and silicon carbide, etc. The tin-based material includes one or more of elemental tin, tin oxide, a tin-based alloy, and a tin-carbon compound, etc. When the negative electrode active material includes multiple materials (for example, both graphite and elemental silicon), $D_v90$ and $D_v50$ refer to the relevant particle sizes of the mixed negative electrode active material.

In an embodiment of the present disclosure, the negative electrode active material layer further includes a binder. In some cases, the negative electrode active material layer further includes a conductive agent. The binder may include, but is not limited to, one or more of polyvinylidene fluoride (PVDF), polytetrafluoroethylene (PTFE), polyvinyl alcohol (PVA), polyacrylonitrile (PAN), polyimide (PI), polyacrylic acid (PAA), polyacrylonitrile (PAN), polyacrylate (such as polymethyl methacrylate, polymethyl acrylate, and polyethyl acrylate, etc.), polyolefin (such as polypropylene, and polyethylene, etc.), styrene butadiene rubber (SBR), carboxymethylcellulose (CMC), sodium carboxymethylcellulose (CMC-Na), andsodium alginate. The first conductive agent and the second conductive agent may be one or more independently selected from conductive carbon black (such as acetylene black, ketjen black, Supper P, and 350G carbon black, etc.), furnace black, carbon fibers, carbon nanotubes, and graphene, etc. However, the present disclosure is not limited thereto. The current collector (specifically, the negative electrode current collector) bearing the negative electrode active material may include, but is not limited to, a copper foil, a stainless steel foil, a copper alloy foil, a carbon-coated copper foil, or a copper-plated film, etc.

The negative electrode plate can be obtained by coating a negative electrode slurry containing the negative electrode active material, the binder and optional conductive agent on the current collector, drying, and rolling. The current collector may be coated on one side surface or on two side surfaces. In other words, maybe one side surface of the current collector has the negative electrode active material layer, or two opposite side surfaces of the negative electrode current collector have the negative electrode active material layer. When the negative electrode current collector is coated on two side surfaces, the thickness $D_1$ μm of the negative electrode active material layer refers to the thickness of the negative electrode active material layer on one side. At this time, the thickness of the negative electrode active material layers on two sides of the negative electrode current collector may be the same or different, and the negative electrode active material layer on each side surface of the negative electrode current collector enables the parameter k to fall within the above range.

In the present disclosure, the lithium battery specifically includes a positive electrode plate, a negative electrode plate, an electrolyte solution, and a separator located between the positive electrode plate and the negative electrode plate. The positive electrode active material in the positive electrode plate is a material where lithium ions can be reversibly deintercalated and intercalated. For the lithium battery, the positive electrode active material may include, but is not limited to, one or more of a lithium-unary oxide (such as lithium cobalt oxide, lithium nickel oxide, and lithium manganese oxide, etc.), a lithium-binary oxide (such as lithium nickel manganese oxide, lithium nickel cobalt oxide, and lithium cobalt manganese oxide, etc.), a lithium-ternary oxide (such as lithium nickel cobalt manganese oxide ternary material, or lithium nickel cobalt aluminum oxide ternary material), a lithium-multi-element oxide, and a lithium-containing phosphate (such as lithium iron phosphate, and lithium manganese iron phosphate). The separator can be made of any separator material in the existing battery. Exemplarily, the separator may include, but is not limited to, a polymer separator such as a single-layer polypropylene (PP) film, a single-layer polyethylene (PE) film, a two-layer PP/PE film, a two-layer PP/PP film, and a three-layer PP/PE/PP film, or non-woven cloth.

An embodiment of the present disclosure further provides an electric device. As shown in FIG. 2, an electric device1 includes a lithium battery 10 according to the embodiment of the present disclosure.

In the present disclosure, there are no special restrictions on the electric device using the lithium battery. For example, the electric device includes, but is not limited to, a cell phone, a notebook computer, a tablet computer, a computer with stylus input, a portable fax machine, a portable copier, a portable printer, a transceiver, a video recorder, a camera, a television, a radio, a portable audio recorder, a portable CD player, a mini-disc, an electronic book player, an electronic diary, a wearable device (such as a smart watch, a smart bracelet, a headphone, and a bluetooth headset), a portable cleaner, a calculator, a memory card, a stand-by power source, a vehicle, a motorcycle, a bicycle (such as force-helping bicycle), a lighting appliance (such as flashlight), a toy, a game console, a clock, a power tool, a large household battery, and a lithium-ion capacitor, etc.

Due to the use of the lithium battery, the battery of the electric device has a long battery life, a good cycle performance, and a high safety performance.

Hereinafter, the technical solution of the present disclosure will be further described in combination with specific examples.

Example 1

A lithium-ion battery was prepared through a process including the following steps:

1) Preparation of electrolyte solution: In an argon-filled glove box with a water content of < 1ppm and an oxygen content of < 1 ppm, various non-aqueous organic solvents were mixed according to the composition in Table 1, and the dry lithium salt $LiPF_6$ and the additives were added, to prepare an electrolyte solution containing 14.5% $LiPF_6$.
2) Preparation of positive electrode plate:

A positive electrode active material (specifically lithium cobalt oxide ($LiCoO_2$)), a conductive agent (specifically carbon nanotubes (CNT)), and a binder (specifically polyvinylidene fluoride) were mixed according to a weight ratio of 95: 2: 3. The mixed powder was added to a vacuum stirrer, and the solvent N-methylpyrrolidone (NMP) were added, and uniformly stirred to obtain a positive electrode slurry. The positive electrode slurry was coated on a positive electrode current collector that was an aluminum foil, dried at 85°C, cold-rolled, sliced, cut, and dried under vacuum at 85°C for 4 h, to obtain a positive electrode plate.

3) Preparation of negative electrode plate:

A negative electrode active material (specifically graphite having a particle size and dimension parameter as shown in Table 1) and a binder (specifically styrene-butadiene rubber (SBR) and sodium carboxymethyl cellulose (CMC-Na) at a weight ratio of 2:3) was mixed in ionic water according to a weight ratio of 95: 5, and uniformly stirred in a vacuum stirrer, to obtain a negative electrode slurry. Then the negative electrode slurry was coated on two opposite side surfaces of a negative electrode current collector that was a copper foil, dried, cold-rolled, and cut, to obtain a negative electrode plate. The negative electrode plate includes a copper foil and negative electrode active material layers arranged on two opposite side surfaces of the copper foil. The thickness of each negative electrode active material layer is summarized in Table 1.

4) Assembly of battery:

In an argon-filled glove box, the positive electrode plate, a polyethylene (PE) separator, and the negative electrode plate were stacked in sequence, to obtain a battery core. The stacked battery core was wound and placed in an aluminum-plastic film that was an outer packaging foil, and the prepared electrolyte solution was injected, followed by vacuum packaging, standing, formation, shaping and other procedures. In this way, the preparation of the lithium battery was completed. The calculation results of the performance factor k of the obtained lithium batteries are also summarized in Table 1.

It is to be understood that the sequence of implementing some operations involved in the preparation method of the lithium ion battery is not limited in the present disclosure. For example, operations 1), 2), and 3) may be implemented at the same time, or implemented in a sequence different from the sequence described herein.

Other Examples

Following the preparation method of the battery in Example 1, lithium batteries in other examples and comparative examples were prepared according to the parameters listed in Table 1.

Table 1. Parameters of lithium batteries in various examples and comparative examples

| | 2D1 (μm) | $D_v50$ (μm) | $D_v90$ (μm) | EC:PC: DEC:PP | PS (%) | $W_0$ (%) | $W_1$ (%) | k | $W_0/W_1$ | $W_2$ (%) | $W_2/W_0$ |
|---|---|---|---|---|---|---|---|---|---|---|---|
| Example 1 | 170 | 14 | 30 | 2:2:3:3 | 3.5 | 7 | 4 | 1.79 | 1.75 | 21.3 | 3.04 |
| Example 2 | 150 | 14 | 30 | 2:2:3:3 | 3.5 | 7 | 4 | 1.73 | 1.75 | 21.3 | 3.04 |
| Example 3 | 120 | 14 | 30 | 2:2:3:3 | 3.5 | 7 | 4 | 1.64 | 1.75 | 21.3 | 3.04 |
| Example 4 | 90 | 14 | 30 | 2:2:3:3 | 3.5 | 7 | 4 | 1.55 | 1.75 | 21.3 | 3.04 |
| Example 5 | 60 | 14 | 30 | 2:2:3:3 | 3.5 | 7 | 4 | 1.45 | 1.75 | 21.3 | 3.04 |
| Example 6 | 50 | 14 | 30 | 2:2:3:3 | 3.5 | 7 | 4 | 1.42 | 1.75 | 21.3 | 3.04 |
| Example 7 | 190 | 14 | 30 | 2:2:3:3 | 3.5 | 7 | 4 | 1.85 | 1.75 | 21.3 | 3.04 |
| Example 8 | 90 | 8 | 30 | 2:2:3:3 | 3.5 | 7 | 4 | 1.00 | 1.75 | 21.3 | 3.04 |

(continued)

| | 2D1 (μm) | $D_v50$ (μm) | $D_v90$ (μm) | EC:PC: DEC:PP | PS (%) | $W_0$ (%) | $W_1$ (%) | k | $W_0/W_1$ | $W_2$ (%) | $W_2/W_0$ |
|---|---|---|---|---|---|---|---|---|---|---|---|
| Example 9 | 90 | 10 | 30 | 2:2:3:3 | 3.5 | 7 | 4 | 1.18 | 1.75 | 21.3 | 3.04 |
| Example 10 | 90 | 12 | 30 | 2:2:3:3 | 3.5 | 7 | 4 | 1.36 | 1.75 | 21.3 | 3.04 |
| Example 11 | 90 | 16 | 30 | 2:2:3:3 | 3.5 | 7 | 4 | 1.73 | 1.75 | 21.3 | 3.04 |
| Example 12 | 90 | 18 | 30 | 2:2:3:3 | 3.5 | 7 | 4 | 1.91 | 1.75 | 21.3 | 3.04 |
| Example 13 | 90 | 30 | 36 | 2:2:3:3 | 3.5 | 7 | 4 | 2.95 | 1.75 | 21.3 | 3.04 |
| Example 14 | 90 | 10 | 15 | 2:2:3:3 | 3.5 | 7 | 4 | 1.45 | 1.75 | 21.3 | 3.04 |
| Example 15 | 90 | 14 | 25 | 2:2:3:3 | 3.5 | 7 | 4 | 1.60 | 1.75 | 21.3 | 3.04 |
| Example 16 | 90 | 14 | 35 | 2:2:3:3 | 3.5 | 7 | 4 | 1.50 | 1.75 | 21.3 | 3.04 |
| Example 17 | 90 | 14 | 40 | 2:2:3:3 | 3.5 | 7 | 4 | 1.48 | 1.75 | 21.3 | 3.04 |
| Example 18 | 90 | 14 | 40 | 2:2:3:3 | 3.5 | 5 | 4 | 1.89 | 1.25 | 21.9 | 4.38 |
| Example 19 | 90 | 14 | 40 | 2:2:3:3 | 3.5 | 8 | 4 | 1.42 | 2.00 | 21.0 | 2.63 |
| Example 20 | 90 | 14 | 40 | 2:2:3:3 | 3.5 | 10 | 4 | 1.21 | 2.50 | 20.4 | 2.04 |
| Example 21 | 90 | 14 | 30 | 2:2:3:3 | 3.5 | 12 | 4 | 1.06 | 3.00 | 19.8 | 1.65 |
| Example 22 | 90 | 14 | 30 | 2:2:3:3 | 3.5 | 16 | 4 | 0.85 | 4.00 | 18.6 | 1.16 |
| Example 23 | 90 | 14 | 30 | 2:2:3:3 | 3.5 | 20 | 4 | 0.71 | 5.00 | 17.4 | 0.87 |
| Example 24 | 90 | 14 | 30 | 2:2:3:3 | 3.5 | 7 | 6 | 1.31 | 1.67 | 20.7 | 2.96 |
| Example 25 | 90 | 14 | 30 | 2:2:3:3 | 3.5 | 7 | 10 | 1.00 | 0.70 | 19.5 | 2.79 |
| Example 26 | 90 | 14 | 30 | 2:2:3:3 | 3.5 | 7 | 12 | 0.89 | 0.58 | 18.9 | 2.70 |
| Example 27 | 90 | 14 | 30 | 2:2:3:3 | 3.5 | 7 | 4 | 1.54 | 1.75 | 21.3 | 3.04 |
| Example 28 | 90 | 14 | 30 | 2:2:3:3 | 3.5 | 7 | 4 | 1.54 | 1.75 | 21.3 | 3.04 |
| Example 29 | 90 | 14 | 30 | 2:2:3:3 | 3.5 | 7 | 4 | 1.54 | 1.75 | 21.3 | 3.04 |
| Example 30 | 90 | 14 | 30 | 2:2:3:3 | 3.5 | 7 | 4 | 1.54 | 1.75 | 21.3 | 3.04 |
| Example 31 | 90 | 14 | 30 | 2:2:3:3 | 3.5 | 7 | 4 | 1.54 | 1.75 | 21.3 | 3.04 |
| Example 32 | 90 | 14 | 30 | 2:2:3:3 | 0 | 7 | 4 | 1.55 | 1.75 | 22.4 | 3.19 |
| Example 33 | 90 | 14 | 30 | 2:2:0:6 | 3.5 | 7 | 4 | 1.54 | 1.75 | 42.6 | 6.09 |
| Example 34 | 90 | 14 | 30 | 2:2:6:0 | 3.5 | 7 | 4 | 1.54 | 1.75 | 0 | 0 |
| Comparative Example 1 | 90 | 14 | 30 | 2:2:3:3 | 3.5 | 30 | 12 | 0.40 | 2.50 | 12 | 0.40 |
| Comparative Example 2 | 90 | 8 | 30 | 2:2:3:3 | 3.5 | 14 | 10 | 0.46 | 1.40 | 17.4 | 1.24 |
| Comparative Example 3 | 90 | 14 | 30 | 2:2:3:3 | 3.5 | 2 | 2 | 4.25 | 1.00 | 23.4 | 11.70 |
| Comparative Example 4 | 90 | 14 | 30 | 2:2:3:3 | 3.5 | 0 | 4 | 4.25 | 0 | 23.4 | / |
| Comparative Example 5 | 90 | 14 | 30 | 2:2:3:3 | 3.5 | 7 | 0 | 2.43 | / | 22.5 | 3.21 |

Note: In table 1, EC represents the cyclic carbonate solvent ethylene carbonate, PC represents the cyclic carbonate solvent propylene carbonate, DEC represents the linear carbonate solvent diethyl carbonate, and PP represents the carboxylate solvent propyl propionate. PS represents the additive1,3-propanesultone.
In Examples 1-26 and 32-34 and Comparative Examples 1-5, $W_0$ specifically represents the weight percentage of fluoroethylene carbonate in the electrolyte solution, and $W_1$ specifically represents the total weight percentage of 1,3,6-hexanetricarbonitrile and succinonitrile in the electrolyte solution. In Example 27, $W_0$ specifically represents the weight percentage of 4,5-difluoroethylene carbonate in the electrolyte solution. In Example 28, $W_0$ specifically represents the weight percentage of 4,4,5,5-tetrafluoroethylene carbonate in the electrolyte solution. In Examples 27-28, $W_1$ specifically represents the total weight percentage of 1,3,6-hexanetricarbonitrile and succinonitrile in the electrolyte solution. In Examples 29-31, $W_0$ specifically represents the weight percentage of fluoroethylene carbonate in the electrolyte solution. In Example 29, $W_1$ represents the total weight percentage of 1,3,6-hexanetricarbonitrile and adiponitrile in the electrolyte solution. In Example 30, $W_1$ represents the weight percentage of succinonitrile in the electrolyte solution. In Example 31, $W_1$ specifically represents the weight percentage of adiponitrile in the electrolyte solution.

To provide powerful support for the beneficial effects of the present disclosure, the lithium battery of each example and comparative example was tested for the following electrochemical performances. The results are summarized in Table 2 below.

1) Normal-temperature cycle performance test:

5 test lithium batteries were constant-current charged to a cut-off voltage of 4.48 V at a rate of 1C at normal temperature (25±3°C), and then constant-voltage charged to a cut-off current of 0.05C at 4.48 V, so that the batteries were fully charged. The batteries were allowed to stand for 5 min; and then constant-current discharged to 3.0 V at a rate of 1C, and, allowed to stand for 5 min. This was a charging and discharging cycle. The capacity retention rate and thickness expansion rate after 1000 cycles at normal temperature were recorded. Capacity retention rate after 1000 cycles = (discharging capacity after 1000 cycles/first discharging capacity) *100% Battery thickness expansion rate =(battery thickness when fully charged in the 1000th cycle/battery thickness when fully charged for the first time) * 100%

2) Furnace-temperature performance test at 130°C:

5 lithium batteries in each group were tested. The batteries were constant-current charged to a cut-off voltage of 4.48 V at a rate of 1C at normal temperature (25±3°C), and then constant-voltage charged to a cut-off current of 0.05C at 4.48 V, so that the batteries were fully charged. Then the furnace-temperature test was carried out 12-24 h after the batteries were fully charged (note: the fully charged battery was left to stand for 12 h or more, and could not be tested immediately). Each lithium battery was heated from an initial temperature of 25±3°C convectively or in a circulating hot air box, where the heating rate was controlled to 5±2°C/min, and the heating time was controlled to 25-28 min. The battery was heated to 130±2°C, and maintained at this temperature for 60 min. Then the test was completed. Whether smoking, flame, or explosion occurred to each lithium battery was observed. If the lithium battery did not have the above signs, the lithium battery was considered to pass the furnace-temperature test, and recorded as OK. If the lithium battery had the above signs, the lithium battery was considered not to pass the furnace-temperature test, and recorded as NG. The number of batteries passing the furnace-temperature test in each group of 5 batteries was recorded.

Table 2. Summary of performance test results of lithium batteries in examples and comparative Examples

|  | Capacity retention rate after 1000 cycles at normal temperature (%) | Expansion rate of battery after 1000 cycles at normal temperature/% | Furnace-temperature test at 130°C |
|---|---|---|---|
| Example 1 | 80.4 | 10.6 | 8/10 OK |
| Example 2 | 85.1 | 8.4 | 9/10 OK |
| Example 3 | 87.8 | 8.1 | 10/10 OK |
| Example 4 | 88.4 | 8.0 | 10/10 OK |
| Example 5 | 89.8 | 7.9 | 10/10 OK |
| Example 6 | 84.1 | 14.6 | 7/10 OK |
| Example 7 | 75.8 | 13.5 | 7/10 OK |
| Example 8 | 82.5 | 8.6 | 10/10 OK |
| Example 9 | 84.0 | 8.5 | 10/10 OK |
| Example 10 | 87.6 | 8.3 | 10/10 OK |
| Example 11 | 87.8 | 8.2 | 10/10 OK |
| Example 12 | 88.7 | 8.2 | 10/10 OK |

(continued)

| | Capacity retention rate after 1000 cycles at normal temperature (%) | Expansion rate of battery after 1000 cycles at normal temperature/% | Furnace-temperature test at 130°C |
|---|---|---|---|
| Example 13 | 78.8 | 11.8 | 8/10 OK |
| Example 14 | 88.6 | 9.2 | 10/10 OK |
| Example 15 | 88.0 | 8.4 | 10/10 OK |
| Example 16 | 87.5 | 8.5 | 10/10 OK |
| Example 17 | 85.1 | 8.4 | 10/10 OK |
| Example 18 | 76.4 | 12.7 | 10/10 OK |
| Example 19 | 88.4 | 8.0 | 10/10 OK |
| Example 20 | 88.5 | 9.7 | 9/10 OK |
| Example 21 | 88.6 | 10.6 | 8/10 OK |
| Example 22 | 88.7 | 12.0 | 7/10 OK |
| Example 23 | 88.6 | 14.7 | 6/10 OK |
| Example 24 | 81.6 | 12.4 | 10/10 OK |
| Example 25 | 78.2 | 13.3 | 10/10 OK |
| Example 26 | 75.2 | 15.3 | 10/10 OK |
| Example 27 | 86.4 | 8.6 | 10/10 OK |
| Example 28 | 85.5 | 9.0 | 10/10 OK |
| Example 29 | 87.0 | 8.1 | 10/10 OK |
| Example 30 | 85.0 | 9.2 | 7/10 OK |
| Example 31 | 84.1 | 9.3 | 7/10 OK |
| Example 32 | 86.3 | 9.8 | 6/10 OK |
| Example 33 | 89.0 | 7.8 | 10/10 OK |
| Example 34 | 83.8 | 13.4 | 10/10 OK |
| Comparative Example 1 | 50.4 | 60.2 | 10/10 NG |
| Comparative Example 2 | 53.6 | 23.5 | 7/10 NG |
| Comparative Example 3 | / | / | 10/10 NG |
| Comparative Example 4 | / | / | 10/10 NG |
| Comparative Example 5 | / | / | 10/10 NG |

Note: In Table 2, "/"means that the cycle life of the lithium battery fails to reach 1000 cycles.

As shown in Tables 1 and 2, when the additives in the electrolyte solution of the lithium battery contain both the fluorinated carbonate and the nitrile additive, and the battery composition enables its performance factor k to fall within the range of 0.5-3.0, the lithium battery has good normal-temperature cycle performance, high capacity and low thickness expansion rate of the battery core; and passes the furnace-temperature performance test at 130°C. Particularly, when k is 1.0-2.0, the various performances of the battery are good. When $(2D_1/D_v90+D_v50)/(W_0+W_1)$ (that is, performance factor k) is lower than 0.5 or greater than 3 (Comparative Examples 1-3), the long cycle performance and furnace-temperature performance of the lithium battery are poor, and obviously inferior to those of Example 4 where the characteristic parameters of the negative electrode plate and the organic solvent composition are the same. Additionally, when the electrolyte solution of the lithium battery contains no the fluorinated carbonate or the additive, the performances of the battery are poor. Even if the parameter k is in the range of 0.5-3 (Comparative Example 5), the cycle life of the lithium battery is very poor. For example, the number of cycles is difficult to reach 1000 cycles, and the pass rate of furnace-temperature test is as low as 0.

In addition, from the comparison between Examples 1-5 and 6-7, it can be known that when the thickness $D_1$ of

the negative electrode active material layer is different and other conditions are the same, if k is 0.5-3, the various performances of the battery are good when the thickness of $D_1$ of the negative electrode active material layer is in the range of 30-90 $\mu$m (that is, $2D_1$ in the range of 60-180 $\mu$m), particularly when $D_1$ is 30-75 $\mu$m (that is, $2D_1$ is in the range of 60-150 $\mu$m).

In Examples 18-26, the thickness $D_1$ of the negative electrode active material layer, the particle size parameter of the negative electrode active material, and the organic solvent and the additive PS in the electrolyte solution, are the same, and the content $W_0$ of the fluorinated carbonate and the content $W_1$ of the nitrile substance are different. From the comparison between Example 18 and Example 23, it can be known that under the same conditions, when the content $W_0$ of the fluorinated carbonate in the system is in the range of 2-16, the cycle performance and various other performances of the battery are well balanced, and especially the expansion resistance is good. Particularly, when $W_0$ is in the range of 6-12, $W_0/W_1$ is in a further preferred range of 1.5-3.0, and k is in a further preferred range of 1-2, the battery has excellent comprehensive performance. If $W_2/W_0$ is further $\geq 2$, the comprehensive performance is much better. Additionally, from the comparison of Example 26 with Examples 4 and 24-25, it can be known that when other conditions are the same and the $W_1$ content of the nitrile additive in the system is in the range of 2-10, the battery can maintain a good furnace-temperature performance. Moreover, the viscosity of the electrolyte solution is appropriate, the battery impedance is small, the cycle performance of the battery is excellent and the thickness expansion rate is small.

In addition, from the comparison of Example 4 and Examples 33-34, it can be known that compared with the organic solvent in the electrolyte solution that is a pure carbonate system (for example, Example 34 containing only EC, PC, and DEC), the introduction of a carboxylate improves the long cycle performance of the battery. That is, the cycle performance in Examples 4 and 33 is better than that in Example 34, which can be attributed to the addition of the carboxylate solvent. The addition of the carboxylate solvent reduces the viscosity of the electrolyte solution, improves the infiltrability to the negative electrode, promotes the formation of a uniform and stable SEI film, improves the capacity retention rate in the cycle process, and reduces the thickness expansion rate. Furthermore, from the comparison between Example 4 and Example 32, when the additives in the electrolyte solution include both the fluorinated carbonate and the nitrile additive with the same composition and the parameters of the organic solvent and the negative electrode plate are the same, the introduction of the additive 1,3-propanesultone (PS) can further improve the high-temperature resistance of the battery.

Exemplary embodiments of the present disclosure have been described above, but which cannot be understood as a limitation on the scope of the present disclosure. It should be noted that several improvements and modifications can be made by those of ordinary skill in the art without departing from the principle of the present disclosure, which shall fall within the protection scope of the present disclosure.

**Claims**

1. A lithium battery (10), comprising a positive electrode plate (110), a negative electrode plate (120), a separator (130), and an electrolyte solution (140), the negative electrode plate comprising a current collector and a negative electrode active material layer (122) arranged on at least one side surface of the current collector, the electrolyte solution comprising a lithium salt, an organic solvent, and an additive, and the additive comprising a fluorinated carbonate and a nitrile substance, wherein the negative electrode active material layer has a thickness of $D_1$ $\mu$m, the corresponding particle size is $D_v50$ $\mu$m when the negative electrode active material contained in the negative electrode active material layer has a volume cumulative distribution percentage reaching 50%, and the corresponding particle size is $D_v90$ $\mu$m when the negative electrode active material contained in the negative electrode active material layer has a volume cumulative distribution percentage reaching 90%; based on the total weight of the electrolyte solution, the weight content of the fluorinated carbonate is $W_0$%, and the weight content of the nitrile substance is $W_1$%; the lithium battery has a performance factor k meeting a relation formula below: $k=(2D_1/D_v90+D_v50)/(W_0+W_1)$, and $0.5 \leq k \leq 3.0$.

2. The lithium battery according to claim 1, wherein k is in the range of: $1.0 \leq k \leq 2.0$.

3. The lithium battery according to claim 1 or 2, wherein $W_0$ is in the range of: $2 \leq W_0 \leq 16$.

4. The lithium battery according to claim 1 or 2, wherein $W_0$ is in the range of: $5 \leq W_0 \leq 10$.

5. The lithium battery according to any one of claims 1 to 4, wherein $W_1$ is in the range of: $2 \leq W_1 \leq 10$.

6. The lithium battery according to claim 1 or 2, wherein the ratio of $W_0$ to $W_1$ meets: $0.5 \leq W_0/W_1 \leq 4$.

7. The lithium battery according to claim 1 or 2, wherein the ratio of $W_0$ to $W_1$ meets: $1.5 \leq W_0/W_1 \leq 3.0$.

8. The lithium battery according to any one of claims 1 to 7, wherein $D_1$ is in the range of: $30<D_1<90$.

9. The lithium battery according to any one of claims 1 to 7, wherein $D_1$ is in the range of: $40 \leq D_1 \leq 80$.

10. The lithium battery according to any one of claims 1 to 9, wherein the particle size of the negative electrode active material meets: $8 \leq D_v50 < D_v90 \leq 40$.

11. The lithium battery according to any one of claims 1 to 7, wherein the ratio of $D_1$ to $D_v90$ is greater than or equal to 1.

12. The lithium battery according to any one of claims 1 to 11, wherein the fluorinated carbonate comprises at least one of fluoroethylene carbonate, 4,5-difluoroethylene carbonate, 4,4,5,5-tetrafluoroethylene carbonate, and 4-trifluoromethylethylene carbonate; and the nitrile substance comprises at least one of succinonitrile, adipodinitrile, glutaronitrile, butenedinitrile, 1,4-dicyano-2-butene, 3,3'-oxydipropionitrile, ethylene glycol diacetonitrile ether, 1,2,3-tri(2-cyanooxy)propane, 1,3,5-pentanetricarbonitrile, 1,2,3-propanetricarbonitrile, and 1,3,6-hexanetricarbonitrile.

13. The lithium battery according to any one of claims 1 to 12, wherein the organic solvent comprises a carboxylate substance, and the carboxylate substance comprises at least one of ethyl acetate, propyl acetate, ethyl propionate, propyl propionate, butyl propionate, pentyl propionate, ethyl haloacetate, ethyl halopropionate, propyl halopropionate, butyl halopropionate, and amyl halopropionate.

14. The lithium battery according to claim 13, wherein the organic solvent further comprises a cyclic carbonate.

15. The lithium battery according to claim 14, wherein the organic solvent further comprises a linear carbonate substance.

16. The lithium battery according to any one of claims 13 to 15, wherein based on the total weight of the electrolyte solution, the total weight content of the carboxylate substance is $W_2$ %, and $W_2/W_0 \geq 2$.

17. The lithium battery according to claim 16, wherein the ratio of $W_2$ to $W_0$ meets: $2.5 \leq W_2/W_0 \leq 8$.

18. The lithium battery according to any one of claims 1 to 17, wherein the additive further comprises at least one of 1,3-propanesultone, vinylene carbonate, and vinylethylene carbonate.

19. An electric device (1), the electric device comprising a lithium battery (10) according to any one of claims 1 to 18.

**FIG. 1**

Electric device 1

Lithium
battery 10

**FIG. 2**

## INTERNATIONAL SEARCH REPORT

| International application No. |
|---|
| **PCT/CN2023/120029** |

| A. | CLASSIFICATION OF SUBJECT MATTER |
|---|---|

H01M4/133(2010.01)i; H01M10/0567(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

H01M4/-、H01M10/-

Documentation searched other than minimum documentation to the extent that such documents are included in the fields searched

Electronic data base consulted during the international search (name of data base and, where practicable, search terms used)

CNABS, CNTXT, ENTXTC, DWPI, CJFD, ISI Web of Science: 锂电池, 锂离子电池, 负极活性材料, 负极活性物质, 电解液, 氟代碳酸酯, 氟代碳酸乙烯酯, 三氟甲基碳酸乙烯酯, 腈, 厚度, 粒径, 粒度, Dv50, Dv90, lithium 3w battery, negative, active material, electrolyte, FEC, fluoro+ 1w carbonate, +nitrile, thickness, size

| C. | DOCUMENTS CONSIDERED TO BE RELEVANT |
|---|---|

| Category* | Citation of document, with indication, where appropriate, of the relevant passages | Relevant to claim No. |
|---|---|---|
| E | WO 2023184080 A1 (NINGDE AMPEREX TECHNOLOGY LIMITED) 05 October 2023 (2023-10-05)<br>embodiment 30, and table 1 and table 3 | 1, 3, 5-8, 11, 12 |
| PX | CN 115275103 A (BYD CO., LTD.) 01 November 2022 (2022-11-01)<br>claims 1-19 | 1-19 |
| PX | CN 116391284 A (NINGDE AMPEREX TECHNOLOGY LTD.) 04 July 2023 (2023-07-04)<br>description, paragraphs 38, 46, and 48-50, embodiment 30, and table 1 and table 3 | 1-19 |
| A | CN 114303257 A (NINGDE AMPEREX TECHNOLOGY LTD.) 08 April 2022 (2022-04-08)<br>description, paragraphs 50-55, embodiment 14, and table 3 | 1-19 |
| A | CN 113078292 A (NINGDE AMPEREX TECHNOLOGY LTD.) 06 July 2021 (2021-07-06)<br>description, paragraphs 92-106, embodiment 17, and table 3 | 1-19 |
| A | US 2019089000 A1 (SHENZHEN CAPCHEM TECHNOLOGY CO., LTD.) 21 March 2019 (2019-03-21)<br>embodiment 1 | 1-19 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120029**

| Patent document cited in search report | | | Publication date (day/month/year) | Patent family member(s) | | | Publication date (day/month/year) |
|---|---|---|---|---|---|---|---|
| WO | 2023184080 | A1 | 05 October 2023 | None | | | |
| CN | 115275103 | A | 01 November 2022 | None | | | |
| CN | 116391284 | A | 04 July 2023 | None | | | |
| CN | 114303257 | A | 08 April 2022 | None | | | |
| CN | 113078292 | A | 06 July 2021 | None | | | |
| US | 2019089000 | A1 | 21 March 2019 | US | 10826123 | B2 | 03 November 2020 |
| | | | | WO | 2017173743 | A1 | 12 October 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211169554